# EUROPEAN PATENT SPECIFICATION

(11) **EP 3 098 485 B1**
(45) Date of publication and mention of the grant of the patent: **28.07.2021**
(21) Application number: 15739765.4
(22) Date of filing: 22.01.2015
(51) Int. Cl.: F16J 9/26, C21D 1/06, C21D 1/32, C21D 9/40, C21D 9/52, C22C 38/00, C22C 38/32, C23C 8/02, C23C 8/26, C23C 8/38, C23C 8/50, C23C 8/80

(54) **PRODUCTION METHOD FOR PISTON RING**
HERSTELLUNGSVERFAHREN FÜR KOLBENRING
PROCÉDÉ DE FABRICATION POUR SEGMENT DE PISTON

(30) Priority: 23.01.2014 JP 2014010493
(43) Date of publication of application: 30.11.2016
(73) Proprietor: Kabushiki Kaisha Riken, Tokyo 102-8202 (JP)
(72) Inventor: SHIMA, Yuji, Kashiwazaki-shi Niigata 945-8555 (JP)
(74) Representative: SSM Sandmair
(86) International application number: PCT/JP2015/051614
(87) International publication number: WO 2015/111642

(56) References cited:
- EP-A1- 3 006 787
- JP-A- 2002 317 225
- JP-A- 2009 235 561
- JP-A- 2013 029 191
- JP-A- 2013 076 125
- JP-A- 2014 005 532
- JP-B2- 3 380 748
- JP-B2- 4 954 644
- ZAGONEL L F ET AL: "Influence of the process temperature on the steel microstructure and hardening in pulsed plasma nitriding", SURFACE AND COATINGS TECHNOLOGY, ELSEVIER BV, AMSTERDAM, NL, vol. 201, no. 1-2 12 September 2006 (2006-09-12), pages 452-457, XP024996496, ISSN: 0257-8972, DOI: 10.1016/J.SURFCOAT.2005.11.137 [retrieved on 2006-09-12]

## Description

### FIELD OF THE INVENTION

The present invention relates to a method for producing a piston ring for internal-combustion engines, particularly to a piston ring of low-alloy steel on which a nitrided layer is formed according to claim 1.

### BACKGROUND OF THE INVENTION

Because piston rings for automobile engines are required to have excellent slidability, piston rings made of steel such as silicon-chromium steel (SWOSC-V) and martensitic stainless steel [SUS440B (17% Cr), SUS420J2 (13% Cr), etc.] are usually surface-treated. Among surface treatments, economically advantageous nitriding is conveniently used for martensitic stainless steel, high-alloy steel. However, because silicon-chromium steel, low-alloy steel, is not sufficiently nitrided, ion plating of chromium nitride (CrN) and chromium plating are used.

Piston ring materials are also required to have not only the above slidability, but also heat resistance for keeping spring characteristics, thermal conductivity for cooling pistons, wear resistance for side surfaces, and good workability (hot- and cold-workability). From the aspects of thermal conductivity, workability and cost, heat resistance (heat sag resistance) is desirably improved by using low-alloy steel, to keep spring characteristics and have good wear resistance on the side surfaces. Particularly with respect to the wear resistance of side surfaces, the formation of a desired nitrided layer on low-alloy steel would provide larger economic and environmental effects than those of other surface treatments.

To provide steel capable of being formed by cold rolling and nitriding is no low-alloy steel for piston rings which is better than silicon-chromium steel into light-weight, low-cost piston rings having high performance, JP 2000-282177 A discloses steel comprising 0.50 to 0.80% by weight of C, 1.55 to 3.00% by weight of Si, 0.20 to 1.50% by weight of Mn, 0.60 to 2.00% by weight of Cr and 0.05 to 1.00% by weight of V, the balance being Fe and inevitable impurities, the maximum thickness of oxide inclusions containing 80% or more of A1 or Si being 30 µm or less in a rolling-direction cross-section including a centre portion of the steel. This material is obtained by adding V to the above-described silicon-chromium steel (SWOSC-V), with high upper limits of other elements. With respect to a nitrided layer, it discloses a surface layer having a hardness of 903-1191 HV, and a hardened layer having a depth (not defined) of 0.26 to 0.32 mm, though not disclosing nitriding conditions, etc. To provide an inexpensive piston ring having excellent slidability without wearing ring grooves of an aluminium alloy piston, JP 2005-61389 A discloses a piston ring having a hard coating on an outer peripheral surface of a base material, and a chemical conversion coating on at least one of the upper and lower side surfaces, the base material comprising 0.50 to 0.70% by mass of C, 1.65 to 2.50% by mass of Si, 0.50 to 1.50% by mass of Mn, 0.50 to 3.00% by mass of Cr and 0.05 to 0.50% by mass of V, the balance being Fe and inevitable impurities, and the hard coating being formed by PVD or high-velocity oxy-fuel thermal spraying. It further discloses that when this base material is nitrided, it has a surface hardness of less than 1000 HV 0.1 and 700 HV 0.1 or more, and that even after nitriding, a good chemical conversion coating is formed on its side surfaces. However, nitriding conditions and nitriding depth, etc. are not disclosed. Though materials for the piston rings of JP 2000-282177 A and JP 2005-61389 A are categorised in low-alloy steel, the amount of alloy elements are slightly larger than those in so-called silicon-chromium steel, such that they are poorer than silicon-chromium steel in thermal conductivity. At present, there in thermal conductivity and the formability of a nitrided layer. (insertion pages 3a and 3b filed April 23, 2020)

EP 3 006 787 A1 discloses a large, light-weight, low-tension steel ring, its blank body, and their production methods. Steel comprising C, Si, Mn and Cr as indispensable alloy elements and Ni, V, Mo and V as optional alloy elements and having an adjusted thermal conductivity and/or thermal sag resistance is subjected to hot forging including ring rolling, to form a cylindrical steel body from which a large steel ring having a nominal diameter d1 of 200 mm or more and less than 1100 mm and a reduced ring width h1 and radial thickness a1 is obtained.

JP 2009 235561 A discloses a piston ring comprising a steel material that contains C, Si, Mn and Cr as essential alloying elements and Mo, V and B as selective alloying elements, wherein the composition of the essential alloying elements is 0.20 to 0.90% by mass of C, 0.10 to 0.60% by mass of Si, 0.20 to 1.50% by mass of Mn and 0.30 to 2.00% by mass of Cr, and the composition of the selective alloying elements is 0.10 to 0.40% by mass of Mo, 0.05 to 0.40% by mass of V and 0.001 to 0.003% by mass of B , and wherein a hard coating layer is formed by subjecting a surface layer to a nitriding treatment.

JP 4954644 B2 relates to a combination of a cylinder liner and a piston ring. In the compositions of the piston ring, the first steel material comprises carbon at 0.6 to 0.7% by weight, chromium at 13 to 14% by weight, molybdenum at 0.2 to 0.4% by weight, silicon at 0.25 to 0.50% by weight, manganese at 0.2 to 0.5% by weight and the balance consisting of unavoidable impurities and iron, and the second steel material comprises carbon at 0.26 to 0.4% by weight, chromium at 12 to 14% by weight, nickel at 0.6% or less by weight, silicon at 1.0% or less by weight, manganese at 1.0% or less by weight and the balance consisting of unavoidable impurities and iron. A nitride layer is formed by gas-nitriding onto the outer circumference sliding surface of the piston ring, and the compound layer is removed in order to expose the diffusion layer. JP 4954644 B2 also teaches that a DLC coating can be formed on the outermost surface.

JP 2013 076125 A discloses a steel material having a composition comprising 0.18 to 0.30% by mass of C, 0.10 to 0.30% by mass of Si, 0.10 to 0.40% by mass of Mn, 0.15% or less by mass of P, 0.003% or less by mass of S, 0.0040% or less by mass of N, 0.005 to 0.015% by mass of Ti, 0.13 to 0.40% by mass of Mo, 0.0005 to 0.0020% by mass of B, 0.8 to 1.2% by mass of Cu, and 0.15 to 0.40% by mass of Cr, wherein Cr/Mn (in % by mass) is more than 0.94, and Mo/B (in % by mass) is more than 17.5.

JP 2014 005532 A relates to a spring steel wire. The spring steel wire contains C at 0.40 to 0.65% by mass, Si at 1.0 to 3.0% by mass, Mn at 0.6 to 2.0% by mass, P at 0.015% or less and more than 0% by mass, S at 0.015% or less and more than 0% by mass, A1 at 0.001 to 0.10% by mass, and the balance consisting of iron with inevitable impurities, wherein the structure as a whole exhibits tempered martensite at 70% or more by area and retained austenite at 6 to 15% by area, wherein the austenitic grain size number is 10.0 or more and a tensile strength is 1900 MPa or more.

JP 2013 029191 A discloses a piston ring in which the outer periphery is coated with a TiN film at a thickness of 10 to 60 µm, such that the (111) plane structural coefficient is 1.2 to 1.65 according to an X-ray diffraction measurement of the surface covered by the film, and the (111) plane structural coefficient is greater than the (220) plane structural coefficient, which is in turn greater than the (200) plane structural coefficient. In order to obtain superior low-friction sliding characteristics without compromising the superior thermal conductivity of TiN, the TiN coating is additionally coated with an amorphous hard carbon film.

JP 3380748 B2 relates to a piston ring in which the main body to be mounted on a piston ring groove of a piston made of an Al-Si series aluminium alloy is composed of steel containing 0.59 to 0.76% by weight of C, 0.15 to 0.35% by weight of Si, 0.60% or less and preferably 0.4% or more by weight of Mn, the balance consisting of Fe and inevitable impurities.

JP 2002 317225 A discloses a piston ring obtained by heating martensitic stainless steel containing 0.35 to 0.90% by mass of C, 7 to 13% by mass of Cr and 0.05 to 0.20% by mass of N at 850 to 1000 °C and then performing a quenching treatment on it and subjecting at least the sliding face to a nitriding treatment.

### OBJECT OF THE INVENTION

An object of the present invention is to provide a method for producing a piston ring of low-alloy steel having excellent nitridability, namely a piston ring of low-alloy steel having excellent thermal conductivity, on which a sufficient nitrided layer can be formed.

### DISCLOSURE OF THE INVENTION

As a result of intensive research on the relations between the thickness of a nitrided layer having a hardness of 700 HV 0.05 or more, the amounts of alloy elements in a base material, the structure of the base material, etc. and the diffusion of nitrogen, in silicon-chromium steel, it has found that by reducing the amount of Si among the alloy elements, and by having a structure in which C is dispersed as fine carbide, a piston ring of low-alloy steel, which has excellent thermal conductivity and is provided with a nitrided layer sufficient for exhibiting wear resistance, can be obtained.

Thus, the piston ring produced using the method of the present invention is made of steel having alloy elements consisting of C, Si, Mn and Cr as indispensable alloy elements and Mo, V and B as optional alloy elements, the balance being Fe and inevitable impurities, the indispensable alloy elements having a composition consisting of 0.45 to 0.65% by mass of C, 0.15 to 0.35% by mass of Si, 0.65 to 1.00% by mass of Mn and 0.60 to 1.10% by mass of Cr, said optional alloy elements having a composition consisting of less than 0.35% by mass of Mo, less than 0.25% by mass of V and less than 0.001% by mass of B, the total amount of said indispensable alloy elements and said optional alloy elements being less than 3.0% by mass, and a nitrided layer being formed on the surface, wherein: the outermost surface of said nitride layer is a diffusion layer exposed by removing a compound layer; wherein
said diffusion layer has a hardness of 700 to 900 HV 0.05 to a depth of 40 µm from said outermost surface and a hardness reduction ratio of 3 HV 0.05/µm or less in a depth direction to a depth of 40 µm from said outermost surface;
said steel contains C concentrated in prior austenite grain boundaries; and said piston ring is produced from a wire having a predetermined cross-section.

The outermost surface of the nitrided layer is a diffusion layer exposed by removing a compound layer. The piston ring has a hardness HV 0.05 of 700 HV 0.05 or more, with a hardness reduction ratio of 3 HV 0.05/µm or less in a depth direction, to a depth of 40 µm from the outermost surface.

A base material of the piston ring preferably has a hardness which is 90 to 100% of the hardness before nitriding.

The steel contains C concentrated in prior austenite grain boundaries. Prior austenite grains in the steel have a grain size number of preferably 8 or more, even more preferably 9 or more. The steel preferably has a structure in which spheroidal cementite is dispersed in a tempered martensite matrix.

The method of the present invention for producing a piston ring includes the features set forth in claim 1.

### EFFECTS OF THE INVENTION

Because the total amount of alloy elements in low-alloy steel is limited to less than 3.0% by mass, the piston ring produced according to the present invention has good workability and excellent thermal conductivity, making it possible for heat from a piston head to efficiently escape to a cylinder wall. With Si decreased in a matrix, part of the C turned to carbide, and C segregated from grains to boundaries (boundaries of prior austenite grains), nitrogen (N) has a high diffusion coefficient in grains, increasing the depth of a nitrogen diffusion layer having a predetermined hardness, thereby providing the nitrided layer with excellent wear resistance. Because nitriding is conducted at a temperature not higher than the tempering temperature of a wire for the piston ring, the hardness of a base material is not excessively reduced by nitriding, enabling the piston ring to have a sufficient spring constant. The nitrided layer can be applied to the side surfaces of a piston ring to have enough wear resistance, resulting in a large economic and environmental contribution.

### BRIEF DESCRIPTION OF THE DRAWINGS

Figure 1 is a graph showing the hardness (HV 0.05) distributions of nitrided layers in a depth direction in Examples 1 to 4 and Comparative Example 1.
Figure 2 is a photograph showing a cross-section of the nitrided layer of Example 1, in which C is concentrated in grain boundaries.

### DESCRIPTION OF THE PREFERRED EMBODIMENTS

The piston ring produced in accordance with the method of the present invention has been obtained by investigating the influence of alloy components on the nitridability of silicon-chromium steel. The alloy components of silicon-chromium steel are 0.51 to 0.59% by mass of C, 1.20 to 1.60% by mass of Si, 0.50 to 0.80% by mass of Mn, 0.025% or less by mass of P, 0.025% or less by mass of S, 0.50 to 0.80% by mass of Cr and 0.2% or less by mass of Cu. Because nitrogen supplied to the diffusion layer by nitriding appears to partially form CrN, the remainder being dissolved in the base material, the growing speed of the diffusion layer is determined by the precipitation of nitride and the diffusion of nitrogen. The inventor has found that the precipitation of alloy nitrides such as CrN is important in order to increase the hardness of the nitrided layer, and that in order to increase the diffusion speed of nitrogen to form a deep diffusion layer, it is important to make the amounts of solutes such as C, Si, Mn, etc. in the base material as small as possible, thereby reducing interaction between diffused nitrogen and the solutes.

Accordingly, the piston ring produced according to the method of the present invention consists of C, Si, Mn and Cr as indispensable alloy elements, specifically 0.45 to 0.65% by mass of C, 0.15 to 0.35% by mass of Si, 0.65 to 1.00% by mass of Mn and 0.60 to 1.10% by mass of Cr. The amount of Si is reduced to about 1/10 to 1/3.5 in silicon-chromium steel, to increase the diffusion coefficient of nitrogen in the steel. Optional alloy elements, added if necessary to increase the hardness of the nitrided layer, are less than 0.35% by mass of Mo and/or less than 0.25% by mass of V, nitride-forming elements, less than 0.001% by mass of B, and a grain-boundary-strengthening element. However, in order to keep high thermal conductivity, the total amount of the indispensable alloy elements and the optional alloy elements is less than 3.0% by mass. Of course, decreasing the amount of Si increases the thermal conductivity. Because the total amount of alloy elements in silicon-chromium steel has a median of 3.25%, the thermal conductivity of the piston ring produced in accordance with the method of the present invention is higher than that of silicon-chromium steel. P and S are contained as inevitable impurities in the present invention, though not particularly described. P and S are usually 0.035% or less each.

The amount of C as a solute in the base material decreases when C is precipitated as carbide by a heat treatment, and the amount of C dissolved in the grains decreases when C is concentrated in grain boundaries (austenite grain boundaries). To precipitate C as carbide, annealing is preferable in order to form spheroidal cementite. The annealing is preferably conducted at a temperature of 600 to 720 °C, equal to or lower than Ac1 in the Fe-C phase diagram, for 30 to 240 minutes. During the strain-removing heat treatment for avoiding deformation due to strain generated by forming the piston ring, C is concentrated in grain boundaries like B, increasing grain-boundary cohesive energy, thereby strengthening the grain boundaries. The strain-removing heat treatment is preferably conducted at a high temperature, unless the hardness of the base material largely decreases. Specifically, it is preferably conducted at 420 to 480 °C. Absorbing N in a subsequent nitriding step, (C-fixing) carbide changes to carbonitride and then to nitride, so that C atoms are released and concentrated and cohered in grain boundaries. Thus, the existence of C in grain boundaries is clearer after nitriding.

When the low-alloy steel used in accordance with the method of the present invention is nitrided, a compound layer is formed on the outermost surface. Because the compound layer is composed of an Fe₍₂₋₄₎N phase, which has high hardness but comprises a porous oxide film, there is preferably no compound layer on a sliding surface. Accordingly, in the piston ring produced according to the method of the present invention, the compound layer is preferably removed to expose a diffusion layer on the outermost surface of the nitrided layer. In order that the nitrogen diffusion layer functions as a sliding surface having excellent wear resistance, the diffusion layer having a Vickers hardness of 700 to 900 HV 0.05 is as thick as 40 µm or more, preferably 50 µm or more, even more preferably 60 µm or more. The nitrided layer is preferably uniform in a depth direction. The hardness reduction ratio of the nitrided layer in a depth direction is 3 HV 0.05/µm or less, preferably 2 HV 0.05/µm or less, even more preferably 1 HV 0.05/µm or less, to a depth of 40 µm from the outermost surface. To have as small a hardness reduction ratio as possible in a depth direction, the diffusion coefficient of nitrogen in the grains should be high.

Because low-alloy steel is used in the present invention, nitriding should be carried out while avoiding the softening of the base material. In the piston ring produced according to the present invention, the base material should have a predetermined hardness (of for example 400 to 500 HV 1), admissible softening being such that the hardness of the base material is preferably 90 to 100%, more preferably 92 to 100%, even more preferably 94 to 100%, of that before nitriding. To suppress the softening of the base material to the above degree, nitriding is conducted at a temperature within ±30 °C of the tempering temperature.

The nitrided layer is formed in a sliding portion of the piston ring produced according to the present invention. The nitrided layer is preferably formed on side surfaces of a top ring sliding in a ring groove of a piston, in order to reduce the wear of a ring groove of a piston. Of course, the nitrided layer may be formed as a primer layer, in order to form a chemical conversion coating or an adhesion-preventing coating on it. Depending on applications, a hard coating such as CrN, TiN, DLC, etc. may be formed on an outer peripheral sliding surface on or without the nitrided layer.

A wire having a predetermined cross-section for producing the piston ring in accordance with the present invention is obtained from steel produced by a melting method and comprises 0.45 to 0.65% by mass of C, 0.15 to 0.35% by mass of Si, 0.65 to 1.00% by mass of Mn and 0.60 to 1.10% by mass of Cr as indispensable alloy elements and less than 0.35% by mass of Mo, less than 0.25% by mass of V and less than 0.001% by mass of B as optional alloy elements, the total amount of the indispensable alloy elements and the optional alloy elements being less than 3.0% by mass, the steel being hot-rolled to a wire, and the wire being subjected to a series of steps including patenting, cleaning with acid, drawing, patenting, cleaning with acid, drawing and oil tempering (oil quenching and tempering). To precipitate C as spheroidal cementite, one of the patenting steps is preferably replaced by the above spheroidisation annealing. The patenting is a heat treatment for continuously causing isothermal transformation or cooling transformation to form a fine pearlite structure in a line heat treatment, which is carried out specifically at a temperature of 900 °C to 600 °C. The oil tempering is a so-called oil quenching-tempering treatment, which should be carried out with at such a temperature and over such a time as to avoid all carbide from dissolving to maintain precipitated spheroidal cementite. The quenching step is conducted after heating at a temperature of 820 to 980 °C for several tens of seconds to several minutes (for example, 30 seconds to 3 minutes), and the tempering step is conducted at a temperature of 440 to 500 °C for several tens of seconds to several minutes (for example, 30 seconds to 3 minutes). The nitrided layer can be formed not only by gas-nitriding, but also by salt-bath nitriding or plasma nitriding. To avoid the formation of a compound layer on the outermost surface, plasma nitriding is preferable.

### Example 1 (E1)

Steel having a composition comprising 0.51% by mass of C, 0.29% by mass of Si, 0.72% by mass of Mn, 0.92% by mass of Cr and 0.19% by mass of V, the balance being Fe and inevitable impurities, was produced by melting in a 10 kg vacuum induction furnace. The steel was hot-rolled to form a rod having a diameter of 10 mm and then drawn to form a wire having a rectangular cross-section of 2.3 mm in thickness and 1.0 mm in width. Annealing was conducted at 700 °C for 60 minutes during the drawing step. Oil tempering was conducted by oil quenching from heating at 930 °C for 45 seconds to 60 °C, and tempering at 470 °C for 60 seconds. The above wire was formed into a compression ring having a nominal diameter of 73 mm, which was subjected to a strain-removing heat treatment at 450 °C for 60 minutes, and provided with an ion-plated CrN coating on the outer peripheral surface, and a gas-nitrided layer on the side and inner peripheral surfaces. The nitriding conditions were 500 °C and 180 minutes. The hardness of a base material before nitriding was measured in advance.

### [1] Measurement of thermal conductivity

Thermal conductivity was measured 3 times by a laser flash method on samples as thick as 1 mm, which were cut out of a rod having a diameter of 5 mm, which was made of the steel of Example 1, and polished. The average thermal conductivity obtained from three measured data was 38 W/m·K.

### [2] Measurement of hardness of nitrided layer

The compression ring of Example 1 was cut, and its cross-section was mirror-polished. The micro-Vickers hardness (HV 0.05) of the nitrided layer on the side surface was measured at every depth of 20 µm in a range of 20 µm to 120 µm from the surface. The hardness values were 802 HV 0.05 at a position of 20 µm, 780 HV 0.05 at a position of 40 µm, 766 HV 0.05 at a position of 60 µm, 701 HV 0.05 at a position of 80 µm, 671 HV 0.05 at a position of 100 µm and 565 HV 0.05 at a position of 120 µm. It was calculated from these data that the hardness reduction ratio was 0.9 HV 0.05/µm between 20 µm and 60 µm, 2.0 HV 0.05/µm between 40 µm and 80 µm, and 2.4 HV 0.05/µm between 60 µm and 100 µm, indicating that even after removing a portion as thick as about 30 µm including the compound layer, the hardness reduction ratio of 2.0 HV 0.05/µm or less was secured. The base material had a hardness of 435 HV 1, 92.8% of the hardness of 469 HV 1 before nitriding.

### Examples 2 to 4 (E2 to E4), and Comparative Example 1 (C1)

Each wire was produced in the same manner as in Example 1, except for using steel having the composition shown in Table 1, and formed into a compression ring which was provided with a CrN coating on the outer peripheral surface and a nitrided layer on the side and inner peripheral surfaces. The thermal conductivity of each compression ring, and the hardness of each nitrided layer and each base material, were measured. The results are shown in Tables 1 to 3 together with those of Example 1.

**Table 1**

| No. | Composition (% by mass)* | | | | | | | | Thermal Conductivity W/m·K |
|---|---|---|---|---|---|---|---|---|---|
| | C | Si | Mn | Cr | Mo | V | B | Total | |
| E1 | 0.51 | 0.29 | 0.72 | 0.92 | - | 0.19 | - | 2.63 | 38 |
| E2 | 0.59 | 0.21 | 0.69 | 1.01 | 0.28 | | - | 2.78 | 35 |
| E3 | 0.48 | 0.19 | 0.92 | 0.88 | - | - | 0.0005 | 2.47 | 39 |
| E4 | 0.46 | 0.24 | 0.81 | 0.71 | 0.22 | 0.14 | - | 2.58 | 38 |
| C1 | 0.55 | 1.44 | 0.68 | 0.71 | - | - | - | 3.38 | 31 |

| | | | | | | | | | |
|---|---|---|---|---|---|---|---|---|---|
| * P and S were contained as inevitable impurities, though not listed in the table above. | | | | | | | | | |

**Table 2**

| No. | Hardness of Nitrided Layer, HV 0.05 (depth from surface, µm) | | | | | | Hardness Reduction Ratio HV 0.05/µm | | | |
|---|---|---|---|---|---|---|---|---|---|---|
| | 20 | 40 | 60 | 80 | 100 | 120 | 20-60 µm | 40-80 µm | 60-100 µm | 80-120 µm |
| E1 | 802 | 780 | 766 | 701 | 671 | 565 | 0.9 | 2.0 | 2.4 | 3.4 |
| E2 | 885 | 860 | 847 | 791 | 736 | 670 | 1.0 | 1.7 | 2.8 | 3.0 |
| E3 | 756 | 745 | 732 | 680 | 655 | 608 | 0.6 | 1.6 | 1.9 | 1.8 |
| E4 | 794 | 787 | 759 | 683 | 612 | 536 | 0.9 | 2.6 | 3.7 | 3.7 |
| C1 | 726 | 670 | 570 | 512 | 494 | 469 | 3.9 | 4.0 | 1.9 | 1.1 |

**Table 3**

| No. | Hardness of Base Material, HV 1 | | |
|---|---|---|---|
| | Before Nitriding | After Nitriding | Ratio⁽¹⁾ (%) |
| E1 | 469 | 435 | 92.8 |
| E2 | 488 | 461 | 94.5 |
| E3 | 444 | 402 | 90.5 |
| E4 | 456 | 427 | 93.6 |
| C1 | 494 | 423 | 85.6 |

| | | | |
|---|---|---|---|
| Note: (1) The ratio of hardness after nitriding to hardness before nitriding. | | | |

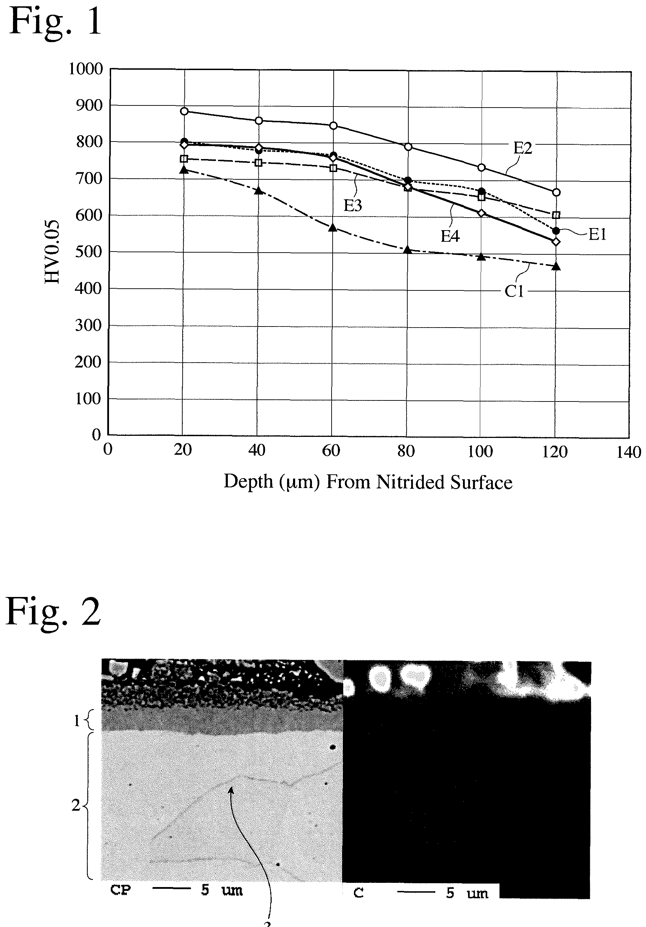

Figure 1 shows the hardness of each nitrogen diffusion layer shown in Table 2, which is plotted against the depth from the nitrided surface. The hardness values were 700 HV 0.05 or more up to the depth of 110 µm in Example 2 (E2), and 700 HV 0.05 or more up to the depth of 70 µm in Example 4 (E4). It is thus clear that even after removing a portion as thick as about 30 µm including the compound layer, the hardness is 700 HV 0.05 or more up to a depth of 40 µm from the outermost surface, with an extremely small hardness reduction ratio in a depth direction. In Examples 1 to 4 (E1 to E4), the hardness reduction ratios in a depth direction were 3 HV 0.05/µm or less in a region having a hardness of 700 HV 0.05 or more. In Comparative Example 1 (C1), however, the diffusion layer having a hardness of 700 HV 0.05 or more was to a depth of 30 µm, indicating that nitriding should be conducted for a considerably long period of time in order for example to have a hardness of 700 HV 0.05 or more to a depth of 70 µm, making a nitrided piston ring unpractical.

As shown in Table 3, the base materials maintained a hardness of 90.5 to 94.5% relative to those before nitriding, despite being decreased by nitriding. In Examples 1, 2 and 4 (E1, E2 and E4) containing Mo and/or V, the base materials had a relatively high hardness before and after nitriding, with a ratio (after nitriding to before nitriding) of 92% or more. In Comparative Example 1 (C1), however, the hardness largely decreased by nitriding, with a ratio (after nitriding to before nitriding) of 85.6%.

In the cross-section in Example 1, Figure 2 shows its structure observed by a microscope (in the left-hand photograph), and the area analysis result of C (in the right-hand photograph) by an electron probe micro analyser (EPMA). It is clear that C is concentrated in grain boundaries in the diffusion layer.

### Examples 5 and 6 (E5 and E6) and Comparative Example 2 (C2)

Compression rings were produced in the same manner as in Example 1, except that nitriding was conducted under the conditions shown in Table 4. As in Example 1, the hardness of each nitrided layer and each base material was measured. The results are shown in Tables 5 and 6.

**Table 4**

| No. | Nitriding Conditions | |
|---|---|---|
| | Temperature (°C) | Time (minutes) |
| E5 | 470 | 180 |
| E6 | 440 | 300 |
| C2 | 510 | 180 |

**Table 5**

| No. | Hardness of Nitrided Layer, HV 0.05 (depth from surface, µm) | | | | | | Hardness Reduction Ratio HV 0.05/µm | | | |
|---|---|---|---|---|---|---|---|---|---|---|
| | 20 µm | 40 µm | 60 µm | 80 µm | 100 µm | 120 µm | 20-60 µm | 40-80 µm | 60-100 µm | 80-120 µm |
| E5 | 802 | 745 | 693 | 623 | 533 | 459 | 2.7 | 3.1 | 4.0 | 4.1 |
| E6 | 773 | 732 | 660 | 599 | 512 | 501 | 2.8 | 3.3 | 3.7 | 2.5 |
| C2 | 811 | 782 | 762 | 728 | 673 | 564 | 1.2 | 1.4 | 2.2 | 4.1 |

**Table 6**

| No. | Hardness of Base Material, HV 1 | | |
|---|---|---|---|
| | Before Nitriding | After Nitriding | Ratio⁽¹⁾ (%) |
| E5 | 469 | 435 | 92.8 |
| E6 | 455 | 433 | 95.2 |
| C2 | 465 | 414 | 89.0 |

| | | | |
|---|---|---|---|
| Note: (1) The ratio of hardness after nitriding to hardness before nitriding. | | | |

As is clear from Table 6, when the nitriding temperature exceeded +30 °C over the tempering temperature (Comparative Example 2, C2), the hardness of the base material decreased by nitriding to less than 90% of that before nitriding, and when the nitriding temperature was equal to the tempering temperature (Example 5, E5) or lower than it (Example 6, E6), the hardness of the base material did not decrease through nitriding to less than 92% or 94%. With respect to the nitriding depth, as is clear from Table 5, a diffusion layer having a hardness of 700 HV 0.05 or more was obtained to a sufficient depth (up to about 50 µm) by slightly elongating the nitriding time even at a low nitriding temperature.

## Claims

1. A method for producing a piston ring comprising the steps of:
providing a wire made of steel having alloy elements consisting of C, Si, Mn and Cr as indispensable alloy elements and Mo, V and B as optional alloy elements, the balance being Fe and inevitable impurities, said indispensable alloy elements having a composition consisting of 0.45 to 0.65 % by mass of C, 0.15 to 0.35 % by mass of Si, 0.65 to 1.00 % by mass of Mn and 0.60 to 1.10 % by mass of Cr, said optional alloy elements having a composition consisting of less than 0.35 % by mass of Mo, less than 0.25 % by mass of V and less than 0.001 % by mass of B, the total amount of said indispensable alloy elements and said optional alloy elements being less than 3.0 % by mass;
conducting oil quenching and tempering treatments of the wire at a quenching temperature of 820 to 930 °C and a tempering temperature of 440 to 500 °C before forming the piston ring from the wire;
conducting a strain-removing of the formed piston ring by heat treatment at a temperature of 420 to 480 °C, lower than said tempering temperature,
nitriding the piston ring subjected to strain-removing treatment at a temperature within ±30 °C of said tempering temperature to obtain a nitrided layer comprising a compound layer consisting of a Fe₍₂₋₄₎N phase and a diffusion layer; and
removing the compound layer on the outermost surface of the nitrided layer to expose the diffusion layer.

2. The method according to Claim 1, wherein annealing is conducted before said oil quenching and tempering treatments.

3. The method according to Claim 1 or Claim 2, wherein said piston ring contains C concentrated in prior austenite grain boundaries.

4. The method according to Claim 1 or Claim 2, wherein said piston ring has a structure in which spheroidal cementite is dispersed in a tempered martensite matrix.

5. The method according to Claim 1 or Claim 2, wherein said nitrided layer is formed on side surfaces of the piston ring.

## Patentansprüche

1. Verfahren zur Herstellung eines Kolbenrings umfassend die Schritte von:
Bereitstellen eines Drahts hergestellt aus Stahl mit Legierungselementen bestehend aus C, Si, Mn und Cr als unverzichtbare Legierungselemente und Mo, V und B als optionale Legierungselemente, wobei der Rest Fe und unvermeidbare Verunreinigungen ist, wobei die unverzichtbaren Legierungselemente eine Zusammensetzung bestehend aus 0,45 bis 0,65 Masse-% C, 0,15 bis 0,35 Masse-% Si, 0,65 bis 1,00 Masse-% Mn und 0,60 bis 1,10 Masse-% Cr aufweisen, wobei die optionalen Legierungselemente eine Zusammensetzung bestehend aus weniger als 0,35 Masse-% Mo, weniger als 0,25 Masse-% V und weniger als 0,001 Masse-% B aufweisen, wobei die Gesamtmenge der unverzichtbaren Legierungselemente und der optionalen Legierungselemente weniger als 3,0 Masse-% beträgt;
Durchführen von Ölabschreck- und Anlassbehandlungen des Drahts bei einer Abschrecktemperatur von 820 bis 930 °C und einer Anlasstemperatur von 440 bis 500 °C vor dem Bilden des Kolbenrings aus dem Draht;
Durchführen einer Spannungsentfernung von dem gebildeten Kolbenring durch Wärmebehandlung bei einer Temperatur von 420 bis 480 °C, die niedriger als die Anlasstemperatur ist,
Nitrieren des Kolbenrings, der Spannungsentfernungsbehandlung ausgesetzt wurde, bei einer Temperatur innerhalb ±30 °C der Anlasstemperatur, wobei eine nitrierte Schicht umfassend eine Verbindungsschicht bestehend aus einer Fe₍₂₋₄₎N-Phase und eine Diffusionsschicht erhalten wird; und
Entfernen der Verbindungsschicht auf der äußersten Oberfläche der nitrierten Schicht, um die Diffusionsschicht zu exponieren.

2. Verfahren gemäß Anspruch 1, wobei Glühen vor den Ölabschreck- und Anlassbehandlungen durchgeführt wird.

3. Verfahren gemäß Anspruch 1 oder Anspruch 2, wobei der Kolbenring C konzentriert in ehemaligen Austenitkorngrenzen enthält.

4. Verfahren gemäß Anspruch 1 oder Anspruch 2, wobei der Kolbenring eine Struktur, in der kugelförmiger Zementit in einer angelassenen Martensit-Matrix dispergiert ist, aufweist.

5. Verfahren gemäß Anspruch 1 oder Anspruch 2, wobei die nitrierte Schicht auf Seitenoberflächen des Kolbenrings gebildet wird.

## Revendications

1. Procédé pour produire un segment de piston, comprenant les étapes de :
la fourniture d'un fil fait d'acier ayant des éléments d'alliage constitués de C, de Si, de Mn et de Cr en tant qu'éléments d'alliage indispensables et de Mo, de V et de B en tant qu'éléments d'alliage optionnels, le reste étant du Fe et des impuretés inévitables, lesdits éléments d'alliage indispensables ayant une composition constituée de 0,45 à 0,65 % en masse de C, de 0,15 à 0,35 % en masse de Si, de 0,65 à 1,00 % en masse de Mn et de 0,60 à 1,10 % en masse de Cr, lesdits éléments d'alliage optionnels ayant une composition constituée de moins de 0,35 % en masse de Mo, de moins de 0,25 % en masse de V et de moins de 0,001 % en masse de B, la quantité totale desdits éléments d'alliage indispensables et desdits éléments d'alliage optionnels étant moins de 3,0 % en masse ;
la réalisation de traitements de trempe et de revenu à l'huile du fil à une température de trempe de 820 à 930 °C et une température de revenu de 440 à 500 °C avant de former le segment de piston à partir du fil ;
la réalisation d'une élimination de déformation du segment de piston formé par traitement thermique à une température de 420 à 480 °C, inférieure à ladite température de revenu,
la nitruration du segment de piston soumis au traitement d'élimination de déformation à une température au sein de ±30 °C de ladite température de revenu pour obtenir une couche nitrurée comprenant une couche composée constituée d'une phase Fe₍₂₋₄₎N et une couche de diffusion ; et
l'élimination de la couche composée sur la surface la plus extérieure de la couche nitrurée pour exposer la couche de diffusion.

2. Procédé selon la revendication 1, dans lequel un recuit est réalisé avant lesdits traitements de trempe et de revenu à l'huile.

3. Procédé selon la revendication 1 ou la revendication 2, dans lequel ledit segment de piston contient du C concentré dans des joints de grains austénitiques précédents.

4. Procédé selon la revendication 1 ou la revendication 2, dans lequel ledit segment de piston a une structure dans laquelle une cémentite sphéroïdale est dispersée dans une matrice martensitique revenue.

5. Procédé selon la revendication 1 ou la revendication 2, dans lequel ladite couche nitrurée est formée sur des surfaces latérales du segment de piston.
